# EUROPEAN PATENT APPLICATION

(11) **EP 4 000 978 A1**
(43) Date of publication of application: **25.05.2022**
(21) Application number: 21205029.8
(22) Date of filing: 27.10.2021
(51) Int. Cl.: B60K 1/04, B62D 21/02

(54) **A BATTERY PACK MOUNTING ARRANGEMENT FOR A CARGO ELECTRIC VEHICLE**

(30) Priority: 19.11.2020 IN 202021050433
(71) Applicant: Piaggio & C. S.P.A., 56025 Pontedera Pisa (IT)
(72) Inventor: GUPTA, Nitin, Pimpri, Pune (IN); RAKESH, Gujjala Bala Manikya Tulasi, Vizianagaram (IN); MANE, Atul Biraj, Indapur, DIST-Pune (IN); PALANIVELU, Sivakumar, Akurdi , Pune (IN)
(74) Representative: Carangelo, Pierluigi

(57) **Abstract**

The present disclosure relates to mounting arrangements of battery packs in vehicles and envisages a battery pack mounting arrangement for a cargo electric vehicle. The vehicle has a cabin (10) and a cargo section (20). The cargo section (20) has a cargo tray (24) supported on a chassis (21). The long members (22a, 22b) are connected to the cabin (10). A battery case (31) houses the battery pack (30) and is configured to be nested in the cargo section (20) in a space (30a) defined by the space between the long members (22a, 22b), a wall of the cabin (10) and a first cross member (23). The inventive mounting arrangement of the battery pack ensures optimal cargo capacity, driver safety, good ride and handling characteristics, ease of assembly and good cornering characteristics.

## Description

### FIELD

The present disclosure relates to mounting arrangements of battery packs in vehicles. Particularly, the present disclosure relates to mounting arrangements of battery packs in cargo electric vehicles.

### BACKGROUND

The background information herein below relates to the present disclosure but is not necessarily prior art.

With emission control norms becoming stringent by the day, most automobile manufacturers foresee a future when electric vehicles would be more commercially viable. Therefore, electric vehicles of nearly every category have been developed by manufacturers. While electric vehicles are relatively less complicated to be dealt with from the vehicle engineering design point of view, electric vehicles pose their own unique challenges for the engineers.

Primarily, the weight of an electrochemical battery pack is significant, and can be almost one-third of the unloaded weight of an electrical vehicle. Therefore, it is required that the battery pack is positioned on the chassis of the vehicle such that there is minimum challenge from balancing as well as ride and handling point of view of the vehicle.

Currently, electric vehicles have been commonly seen with the battery packs mounted beneath the driver seat. This location is attractive from the point of view of optimal utilization of available space within the prevalent vehicle design. However, in reality, frequent incidents of the high-energy batteries in vehicles catching fire have been reported. Therefore, the location beneath the driver seat becomes less preferable when fire safety is considered.

Hence, it is a challenge for vehicle engineers to arrange a high power battery pack within the available space on the chassis of a vehicle, while ensuring maximum space is available for loading cargo, while also ensuring driver safety, comfortable ride and handling characteristics as also ease of assembly within a manufacturing setup with a high-production rate.

Thus, there is a need of a battery pack mounting arrangement for a cargo electric vehicle, which ameliorates the aforementioned issues associated with prior art while fulfilling the desired objectives.

### OBJECTS

Some of the objects of the present disclosure, which at least one embodiment herein satisfies, are as follows:
A primary object of the present disclosure is to provide a battery pack mounting arrangement for a cargo electric vehicle.

Another object of the present disclosure is to provide a battery pack mounting arrangement for a cargo electric vehicle, which ensures good balancing as well as ride and handling characteristics of the vehicle.

Yet another object of the present disclosure is to provide a battery pack mounting arrangement for a cargo electric vehicle, which ensures maximum space is available for loading cargo.

Still another object of the present disclosure is to provide a battery pack mounting arrangement for a cargo electric vehicle, which ensures driver safety.

Yet another object of the present disclosure is to provide a battery pack mounting arrangement for a cargo electric vehicle, which is ease of assembly.

Other objects and advantages of the present disclosure will be more apparent from the following description, which is not intended to limit the scope of the present disclosure.

### SUMMARY

The present disclosure envisages a battery pack mounting arrangement for a cargo electrical vehicle. The vehicle is defined by a cabin and a cargo section operatively behind the cabin. The cargo section is supported on a chassis defined by a pair of long members spaced apart from each other and cross members spanning the long members transversely. The cargo section is defined by a cargo tray. The mounting arrangement comprises a battery case, a first set of brackets, a second set of brackets and a set of fasteners.

The battery case houses the battery pack and is configured to be nested in the cargo section in a space defined by the space between the long members, a wall of the cabin and a first cross member.

The first set of brackets is weldable to the outer surface of the opposite walls of the battery case in a predetermined spaced apart distance (d).

The second set of brackets is weldable to the long members and is spaced apart with respect to each other at a distance (D) and is complementary to the first set of brackets in the operative configuration of the arrangement.

Tongues extend from the first set of brackets and the second set of brackets. The tongues of the first set of brackets and the tongues of the second set of brackets overlap each other such that the first set of brackets rests on the second set of brackets on either side of the battery case.

A first set of apertures is provided on the tongues in the first set of brackets. A second set of apertures is provided on the tongues in the second set of brackets. The first set of apertures and the second set of apertures are configured to be aligned to each other along common axes when the first set of tongues is supported on the second set of tongues in an operative configuration of the arrangement.

The set of fasteners is configured to fasten the first set of brackets to the second set of brackets via the first set of apertures and the second set of apertures for mounting the battery pack in a nested configuration in the cargo section in the space.

Preferably, a nut is fixed by welding, on the operative lower surface of the first tongue. The nut is aligned with the first aperture for receiving the fastener.

In a preferred embodiment, the second set of brackets is fixed on the surface of the battery case of the battery pack with the shortest width.

In an embodiment, each of the first brackets is L-shaped, has a case-side wall weldable to the battery case and is provided with reinforcing ribs. Thus, the first tongue of the first bracket extends from the case-side wall towards an operatively outer side of the battery case.

In an embodiment, each of the second brackets has an overlapping portion weldable to a long member and is shaped to overlap an operative top surface of the long member. Thus, the second tongue of the second bracket extends from the overlapping portion towards an operatively inner side of the corresponding long member relative to the vehicle.

Preferably, the battery pack mounting arrangement comprises four first brackets and four second brackets.

In an embodiment, the battery pack is disposed at an operative front extreme position between the long members.

Preferably, the battery pack is disposed below the cargo tray. In an embodiment, the battery pack is disposed below the bed of the cargo tray.

Typically, each of the long members has a box-type construction and a majority of the area of the lateral surfaces of the battery pack is covered by the lateral surfaces of the long members on either side. In an embodiment, the centre of gravity of the battery pack lies within a space between the lateral surfaces of the long members.

In an embodiment, the battery pack is disposed to have the longest dimension of the battery pack extend in a lateral axis of the vehicle.

Preferably, the battery case has a rectangular cross-section.

In an embodiment, the first set of brackets is spaced apart from corners of the battery case. Preferably, the ratio of the centre distance between the apertures to the width of the battery case ranges between 0.6 and 0.95.

In an embodiment, each of the first brackets is folded from a single first blank. Thickness of the first blank ranges between 2mm and 4mm.

In an embodiment, each of the second brackets is folded from a single second blank. Thickness of the second blank ranges between 2mm and 4 mm.

Centre of the first aperture is 41.7 mm away from the lateral edge of the first tongue, and ratio of the diameter of the first aperture to the distance of the centre of the first aperture from the lateral edge of the first tongue ranges between 0.1 and 0.5.

Similarly, centre of the second aperture is 17 mm away from the lateral edge of the second tongue, and ratio of the diameter of the second aperture to the distance of the centre of the second aperture from the lateral edge of the second tongue ranges between 0.15 and 1.

The present disclosure also envisages a cargo electrical vehicle comprising a cabin, a cargo section arranged behind the cabin and defined by a cargo tray, a battery pack and a battery pack mounting arrangement. The cargo section is supported on a chassis of the vehicle defined by a pair of long members spaced apart from each other and cross members spanning the long members.

In another embodiment, the cargo electric vehicle is a three-wheeled cargo electric vehicle.

The present disclosure further envisages a method of mounting a battery pack in a cargo electrical vehicle defined by a cabin, a cargo section operatively behind the cabin. The cargo section is supported on a chassis defined by a pair of long members spaced apart from each other and cross members spanning the long members transversely. The cargo section is defined by a cargo tray. The method comprises the steps of:
i. welding a first set of bracket, having tongues extending therefrom and apertures configured thereon, to the outer surface of the opposite walls of a battery case, of the battery pack, in a spaced apart distance (d);
ii. welding a second set of brackets, having tongues extending therefrom and apertures configured thereon, to the long members in a spaced apart distance (D) so that the distance (d) corresponds to the distance (D);
iii. bringing the battery pack housed in the battery case having hooks provided thereon;
iv. fixing cables between the hooks;
v. lifting the battery pack above the cargo section of the vehicle by means of a lifting device;
vi. lowering the battery pack such that the first set of brackets rest on the second set of brackets;
vii. aligning the apertures configured on the first set of brackets on the apertures configured on the second set of brackets; and
viii. passing fasteners through the apertures and fastening the first set of brackets to the second set of brackets via the bolt passed through the apertures and fastened in the nut.

In an embodiment, step (i) includes a pre-step of folding a sheet metal component to define an L-shaped first bracket having a case-side wall so that the case-side wall is perpendicular to the tongue.

In another embodiment, step (i) includes a pre-step of folding a first blank along a first fold line, a second fold line and a third fold line, each of the folds been made through 90° on the same side of the first blank.

In yet another embodiment, the above pre-step is followed by a pre-step of piercing a first aperture.

In still another embodiment, step (i) includes a pre-step of folding a second blank to obtain the overlapping portion and the second tongue.

In another embodiment, the method includes the pre-step of folding the second blank at three positions along its longitudinal extent, wherein a first bend is through 90° on a first side, a second bend is through 180° on a first side and a third bend is through 90° on a second side.

In yet another embodiment, the above pre-step is followed by a pre-step of piercing a second aperture.

In another embodiment, the above pre-step is followed by a pre-step of welding a nut on the operative lower surface of the second tongue, wherein the nut is aligned with the second aperture so that the shank of a threaded bolt can be fastened therein.

In yet another embodiment, wherein the above pre-step is followed by welding the second bracket on the corresponding long member.

In an embodiment, the nuts are inserted in the apertures and tightened in a diagonal sequence.

In another embodiment, Step (viii) includes a pre-step of passing a rod through the apertures configured on the first set of brackets and the second set of brackets for fine tuning the alignment of the apertures.

In yet another embodiment, the method includes the step of placing a cargo tray on the chassis once the battery is housed in the space.

### BRIEF DESCRIPTION OF THE ACCOMPANYING DRAWING

A battery pack mounting arrangement for a cargo electric vehicle, of the present disclosure, will now be described with the help of the accompanying drawing, in which:
**Figure 1** illustrates an isometric view of the cargo electric vehicle with the battery pack mounting arrangement according to an embodiment of the present disclosure;
**Figure 2A** illustrates a top view of the vehicle of Figure 1 with a hidden cargo tray showing the space for mounting the battery;
**Figure 2B** illustrates a top view of Figure 2A with the battery mounted in the corresponding space;
**Figure 3** illustrates another top view of the vehicle of Figure 1 with a transparent cargo tray;
**Figure 4** illustrates a side view of the vehicle of Figure 1;
**Figure 5** illustrates another top view of the vehicle of Figure 1;
**Figure 6** illustrates a sectional view of the battery pack mounting arrangement of Figure 1;
**Figure 7** shows the detail A highlighted in Figure 6, showing the bracket assembly according to an embodiment of the present disclosure;
**Figure 8** illustrates an isometric view of the vehicle of Figure 1;
**Figure 9** illustrates an isometric view of a battery pack according to an embodiment of the present disclosure;
**Figure 10A** illustrates a side view of the battery pack of Figure 9;
**Figure 10B** shows the detail C highlighted in Figure 10A;
**Figure 11** illustrates an isometric view of a first bracket according to an embodiment of the present disclosure;
**Figures 12A-12D** illustrate the process of manufacturing the first bracket of Figure 11;
**Figure 13** shows the detail B highlighted in Figure 8 showing second brackets;
**Figure 14** illustrates an isometric view of a second bracket according to an embodiment of the present disclosure;
**Figures 15A-15D** illustrate the process of manufacturing the second bracket of Figure 14; and

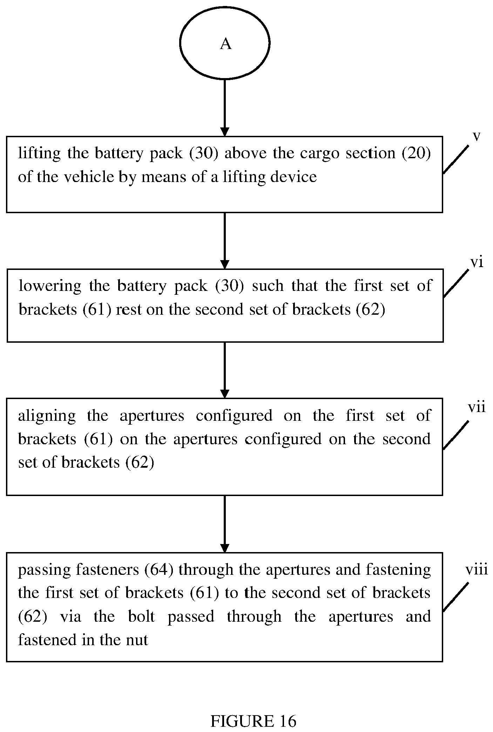

**Figure 16** illustrates a flow chart representing the method of mounting a battery pack in a cargo electrical vehicle.

**LIST OF REFERENCE NUMERALS**

| | |
|---|---|
| 10 | Cabin |
| 11 | Front door |
| 12 | Roof |
| 13 | Door |
| 14 | Floor panel |
| 15 | Back panel |
| 16 | Front wheel |
| 17 | Front mud guard |
| 20 | Cargo section |
| 21 | Chassis |
| 22a, 22b | Long members |
| 23 | First cross member |
| 24 | Cargo tray |
| 25 | Engine and suspension frame member |
| 27a, 27b | Rear wheels |
| 30 | Battery pack |
| 30a | Space |
| 31 | Battery case |
| 32 | Charging connector |
| 33 | Power connector |
| 34 | Communication connector |
| 35 | Cable protection clamp |
| 36 | Hook |
| 37 | First harness |
| 38 | Second harness |
| 61 | First bracket |
| 611 | Case-side wall |
| 612 | First tongue |
| 613 | Rib |
| 614 | First aperture |
| 615 | Notch |
| 616 | First blank |
| 617 | First fold line |
| 618 | Second fold line |
| 619 | Third fold line |
| 62 | Second bracket |
| 621 | Overlapping portion |
| 622 | Second tongue |
| 624 | Second aperture |
| 626 | Second blank |
| 626a | First bend |
| 626b | Second bend |
| 626c | Third bend |
| 63 | Nut |
| 64 | Fastener |

### DETAILED DESCRIPTION

Embodiments, of the present disclosure, will now be described with reference to the accompanying drawing.

Embodiments are provided so as to thoroughly and fully convey the scope of the present disclosure to the person skilled in the art. Numerous details are set forth, relating to specific components, and methods, to provide a complete understanding of embodiments of the present disclosure. It will be apparent to the person skilled in the art that the details provided in the embodiments should not be construed to limit the scope of the present disclosure. In some embodiments, well-known processes, well-known apparatus structures, and well-known techniques are not described in detail.

The terminology used, in the present disclosure, is only for the purpose of explaining a particular embodiment and such terminology shall not be considered to limit the scope of the present disclosure. As used in the present disclosure, the forms "a", "an" and "the" may be intended to include the plural forms as well, unless the context clearly suggests otherwise. The terms "comprises", "comprising", "including" and "having" are open ended transitional phrases and therefore specify the presence of stated features, elements, modules, units and/or components, but do not forbid the presence or addition of one or more other features, elements, components, and/or groups thereof.

The terms first, second, third, etc., should not be construed to limit the scope of the present disclosure as the aforementioned terms may be only used to distinguish one element, component or section from another component or section. Terms such as first, second, third etc., when used herein do not imply a specific sequence or order unless clearly suggested by the present disclosure.

A typical cargo vehicle driven by an internal combustion engine has a cabin 10 in the operative front side and a cargo section 20 in the operative rear side.

The cabin 10 has a body predominantly of sheet metal. Typically, the cabin 10 is made of a front dome 11, a roof 12, an operative left door, an operative right door, a floor panel 14 and a back panel 15. The passenger seat is flush with back panel 15. A steerable front wheel 16 is positioned in the central and front portion below the front dome 11 and is mechanically linked to a steering handle. The front wheel 16 has a front mud guard 17.

The cargo section 20 has a chassis 21 comprising two long members 22a, 22b coupled to the cabin 10 and arranged along the longitudinal direction. Cross members span the long members 22a, 22b. A sheet metal cargo tray 24 is supported on the chassis 21. A left wall, a right wall and a tailgate are attached to a bed of the carrier. The chassis 21 supports a prime mover. A left rear wheel 27a and a right rear wheel 27b are configured to receive power generated by the prime mover.

In one variant, the engine and the fuel tank are disposed below the driver seat. In another variant, the engine and the fuel tank are supported on the chassis 21 of the cargo section 20 below the cargo tray 24, typically by an engine support and suspension frame member 25 that is provided along the central longitudinal axis of the vehicle on a plane below the plane of the long members 22a, 22b. The overall weight of the cabin 10, the cargo section 20, the fuel tank and the powertrain is thus supported by the wheels of the vehicle.

Engineers prefer using the same chassis of a cargo vehicle as the one described above for an electric version of the vehicle, with minimal modifications. It is a challenge for vehicle engineers to arrange a high power battery pack within the available space on the chassis of a cargo vehicle such as the one described above, while ensuring maximum cargo capacity, driver safety, comfortable ride and handling characteristics as also ease of assembly within a manufacturing setup with a high-production rate.

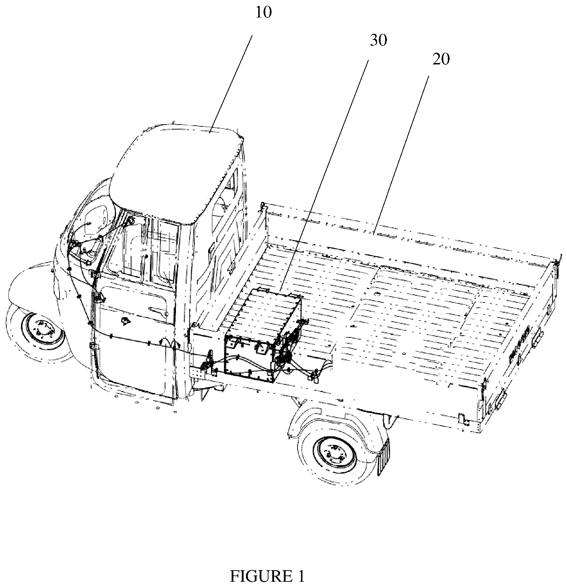

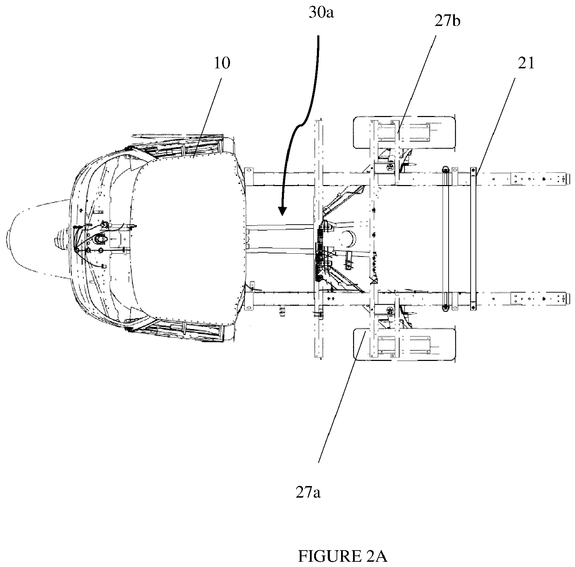

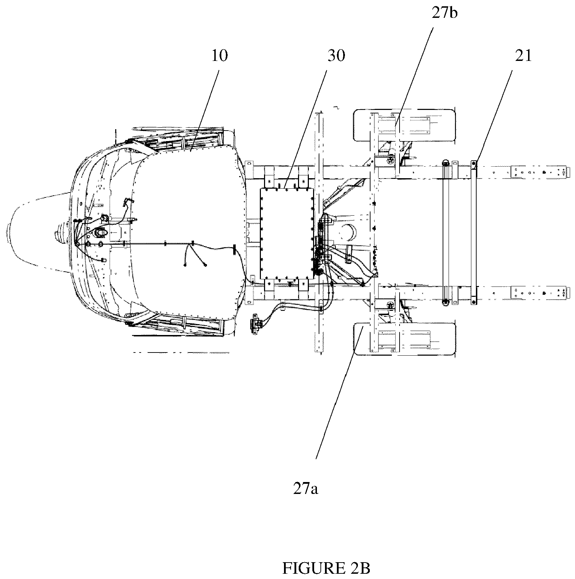

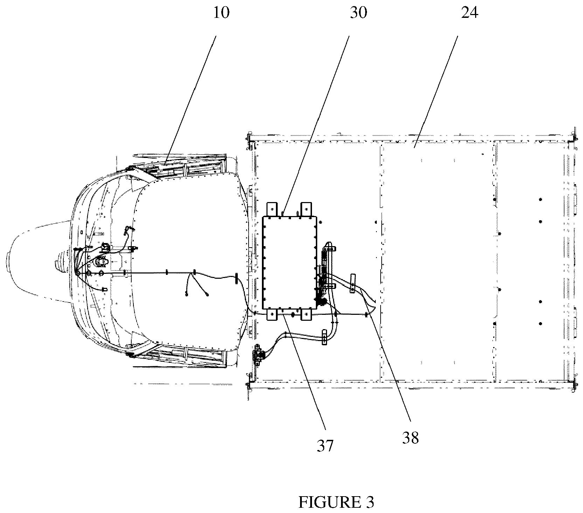

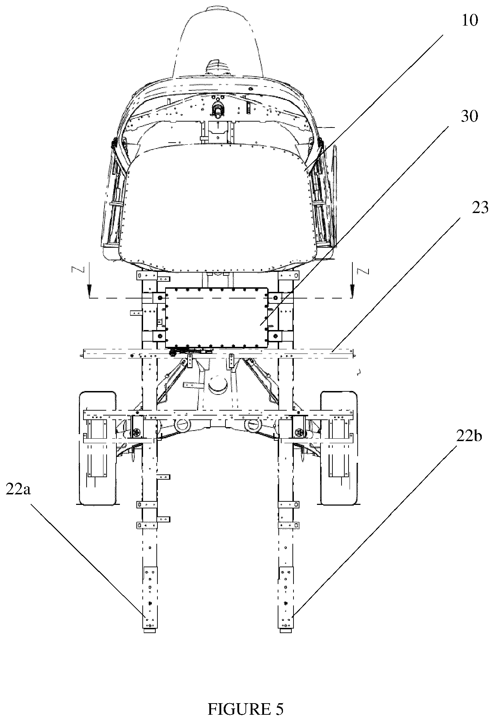

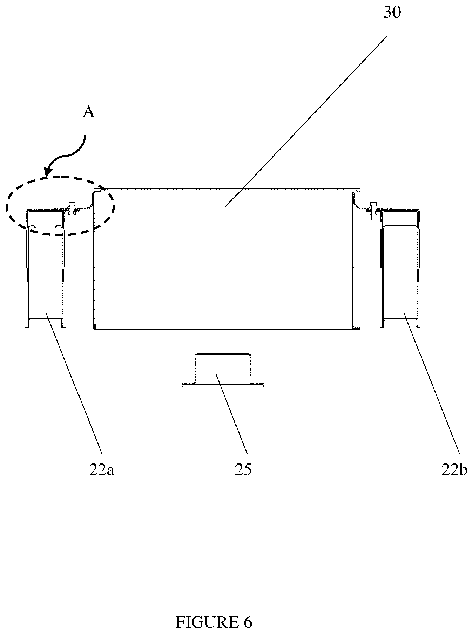

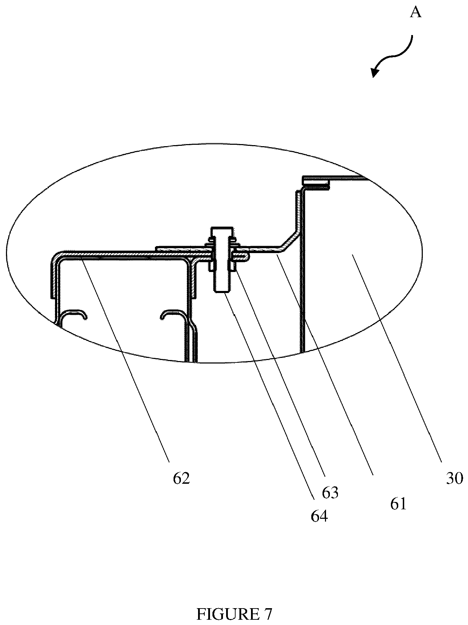

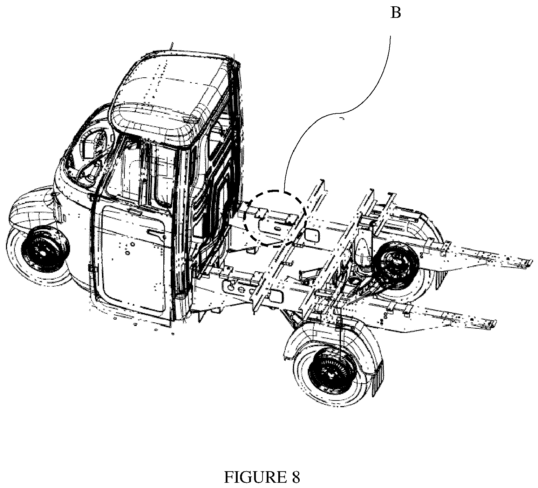

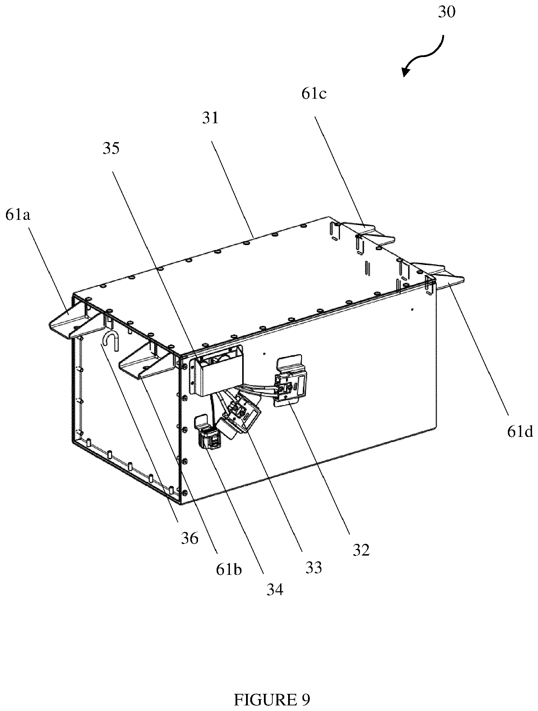

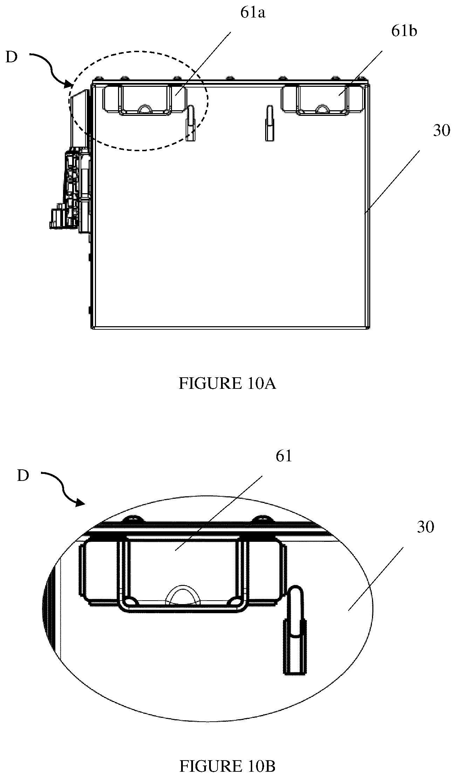

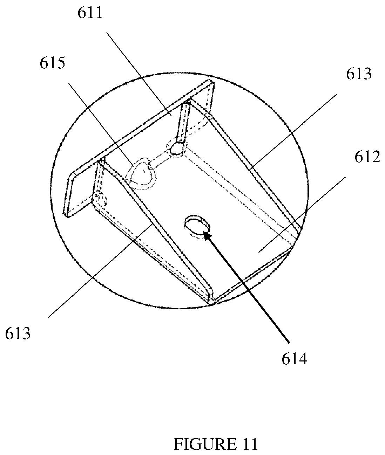

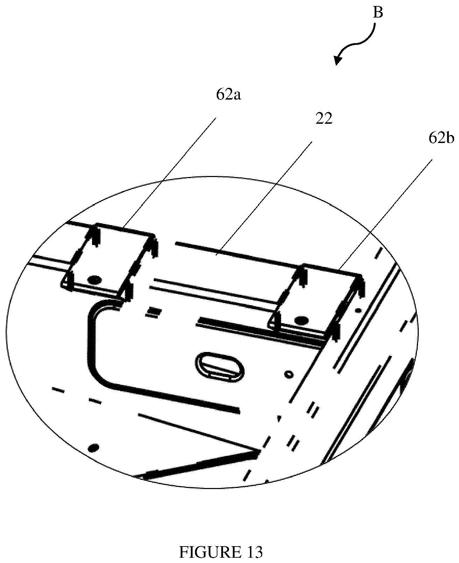

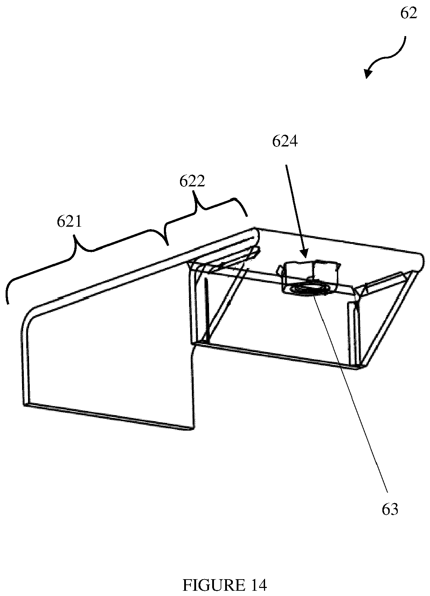

The present disclosure envisages a battery pack mounting arrangement for a cargo electric vehicle, which is described below with the help of **Figures 1-15D****.**

The present disclosure envisages a battery pack mounting arrangement for a cargo electrical vehicle. The vehicle is defined by a cabin 10 and a cargo section 20 operatively behind the cabin 10. The cargo section 20 is supported on a chassis 21 defined by a pair of long members 22a, 22b spaced apart from each other and cross members spanning the long members 22a, 22b transversely. The cargo section 20 is defined by a cargo tray 24. The mounting arrangement comprises a battery case 31, a first set of brackets 61, a second set of brackets 62 and a set of fasteners 64.

The battery pack 30, configured to electrochemically store energy and provide, as per the demand, driving power to a powertrain (not shown), is supported on the chassis of the cargo section of the vehicle. Generally, the case of the battery pack 30 is a rectangular parallelepiped. The battery pack 30 is provided with a plurality of connectors including a charging connector 32, a power connector 33 and a communication connector 34. The connectors are coupled to the control circuit of the battery pack disposed within the battery case 31 via cables of suitable gauges. The portion of the cables where the cables emanate from the battery case 31 is protected by a cable protection clamp 35 fixed on the battery case 31. The charging connector 32, connected to the battery pack 30 through a first harness 37, is preferably disposed at the operative left end of the vehicle. A second harness 38 connects the battery pack 30 to an e-box (not shown). A third harness (not shown) connects the e-box to the powertrain of the vehicle. The e-box is an electronic control device that combines the function of a battery management system and a battery junction box. The powertrain includes the prime mover that is an electric motor and may include reduction gears. In a preferred embodiment, the battery pack 30 is mounted to have the connectors 33, 34, 35 on the operative rear side thereof.

According to an aspect of the present disclosure, the battery pack 30 is supported on the long members 22a, 22b. Specifically, the battery pack 30 is supported on the long members through four bracket assemblies, wherein two of the bracket assemblies are disposed between the battery pack 30 and the left long member and the other two bracket assemblies are disposed between the battery pack 30 and the right long member.

The battery case 31 houses the battery pack 30 and is configured to be nested in the cargo section 20 in a space 30a defined by the space between the long members 22a, 22b, a wall of the cabin 10 and a first cross member 23.

The brackets according to a preferred embodiment shall now be described below.

The first set of brackets 61 is weldable to the outer surface of the opposite walls of the battery case 31 in a predetermined spaced apart distance (d). The second set of brackets 62 is weldable to the long members and is spaced apart with respect to each other at a distance (D), and is complementary to the first set of brackets 61 in the operative configuration of the arrangement.

Tongues 612, 622 extend from the first set of brackets 61 and the second set of brackets 62. The tongues 612 of the first set of brackets 61 and the tongues 622 of the second set of brackets 62 overlap each other such that the first set of brackets 61 rests on the second set of brackets 62 on either side of the battery case 31.

A first set of apertures 614 is provided on the tongues 612 in the first set of brackets 61. A second set of apertures 624 is provided on the tongues 622 in the second set of brackets 62. The first set of apertures 614 and the second set of apertures 624 are configured to be aligned to each other along common axes when the first set of tongues 612 is supported on the second set of tongues 622 in an operative configuration of the arrangement.

The set of fasteners 64 is configured to fasten the first set of brackets 61 to the second set of brackets 62 via the first set of apertures 614 and the second set of apertures 624 for mounting the battery pack 30 in a nested configuration in the cargo section in the space 30a.

Preferably, a nut 63 is fixed by welding, on the operative lower surface of the first tongue 612. The nut 63 is aligned with the first aperture 614 for receiving the fastener 64.

In a preferred embodiment, the second set of brackets 62 is fixed on the surface of the battery case 31 of the battery pack 30 with the shortest width.

In an embodiment, each of the first brackets 61 is L-shaped, has a case-side wall 611 weldable to the battery case 31 and is provided with reinforcing ribs 613. Thus, the first tongue 612 of the first bracket 61 extends from the case-side wall 611 towards an operatively outer side of the battery case 31. The first bracket 61 is a sheet metal component. Preferably, the case-side wall 611 and the first tongue 612 are at a 90° inclination to one another. In a fixed configuration of the first bracket 61, the case-side wall 611 is fixed on the battery case 31 of the battery pack 30 and the first tongue 612 extends perpendicular to the surface of the battery case 31 of the battery pack 30 and parallel to the operative horizontal plane of the battery pack 30.

In an embodiment, each of the second brackets 62 has an overlapping portion 621 weldable to a long member and is shaped to overlap an operative top surface of the long member. Thus, the second tongue 622 of the second bracket 62 extends from the overlapping portion 621 towards an operatively inner side of the corresponding long member relative to the vehicle.

Preferably, the battery pack mounting arrangement comprises four first brackets 61 and four second brackets 62.

In an embodiment, the battery pack 30 is disposed at an operative front extreme position between the long members 22a, 22b.

Preferably, the battery pack 30 is disposed below the cargo tray 24. In an embodiment, the battery pack 30 is disposed below the bed of the cargo tray 24.

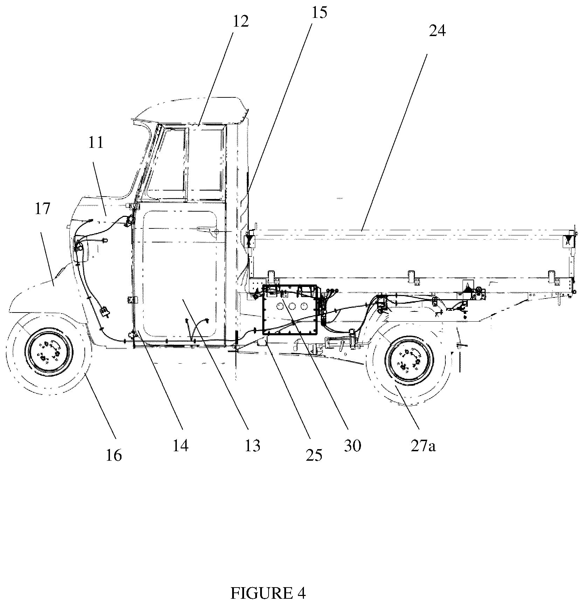

Typically, each of the long members 22a, 22b has a box-type construction and majority of the area of the lateral surfaces of the battery pack 30 is covered by the lateral surfaces of the long members 22a, 22b on either side. Thus, as seen in the side view of Figure 4, the centre of gravity of the battery pack 30 lies within a space between the lateral surfaces of the long members 22a, 22b.

In an embodiment, the battery pack 30 is disposed to have the longest dimension of the battery pack 30 extend in a lateral axis of the vehicle.

Preferably, the battery case 31 has a rectangular cross-section.

In an embodiment, the first set of brackets 61 are spaced apart from corners of the battery case 31. Preferably, the ratio of the centre distance between the apertures 614 to the width of the battery case 31 ranges between 0.6 and 0.95.

In an embodiment, each of the first brackets 61 is folded from a single first blank 616. Thickness of the first blank 616 ranges between 2mm and 4mm.

In an embodiment, each of the second brackets 62 is folded from a single second blank 626. Thickness of the second blank 626 ranges between 2mm and 4 mm.

Centre of the first aperture 614 is 41.7 mm away from the lateral edge of the first tongue 612, and the ratio of the diameter of the first aperture 614 to the distance of the centre of the first aperture 614 from the lateral edge of the first tongue 612 is ranges between 0.1 and 0.5.

Similarly, centre of the second aperture 624 is 17 mm away from the lateral edge of the second tongue 622, and the ratio of the diameter of the second aperture 624 to the distance of the centre of the second aperture 624 from the lateral edge of the second tongue 622 ranges between 0.15 and 1.

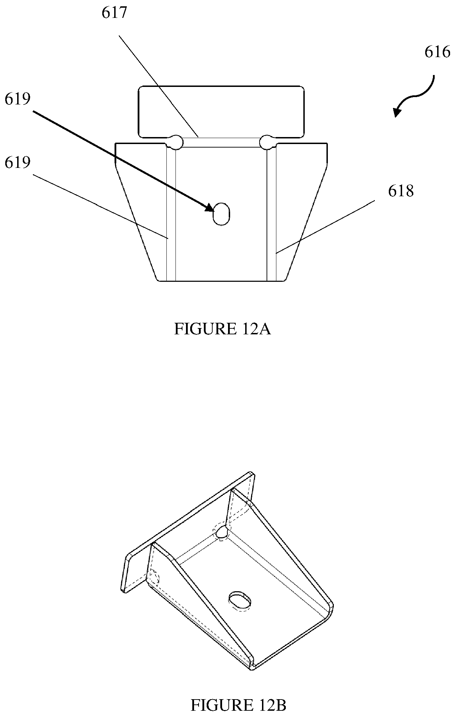

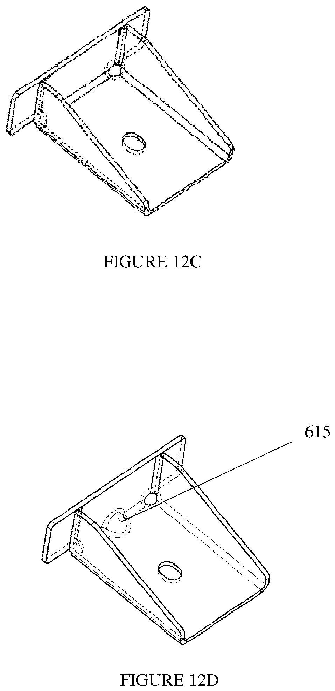

The preferred method of manufacturing of the first bracket 61, as illustrated through Figures 12A-12D, starts with a first blank 616 of sheet metal that has a shape as shown in Figure 12A. The first blank 616 has a first fold line 617, a second fold line 618 and a third fold line 619. The first fold line 617 separates the case-side wall 611 and the first tongue 612 to be formed. The second fold line 618 and the third fold line 619 define the ribs 613. A First aperture 614 is pierced in the area that defines the first tongue before the first blank 616 is folded at the fold lines 617, 618, 619. Each of the folds is through 90° on the same side of the blank. Welding is performed to join the edge of each rib 613 that touches the operative inner surface of the case-side wall 611. Finally, a notch 615 is provided at the operative inner side of the first fold. Preferably, the first bracket 61 is fixed on the battery case 31 of the battery pack 30 by welding between the peripheral edges of the case-side wall 611 and the surface of the battery case 31.

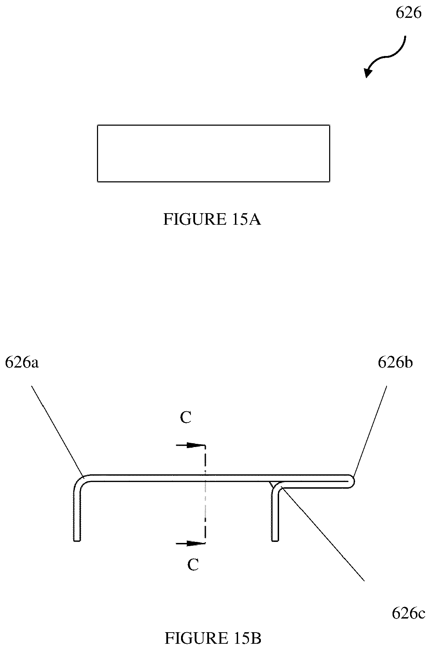

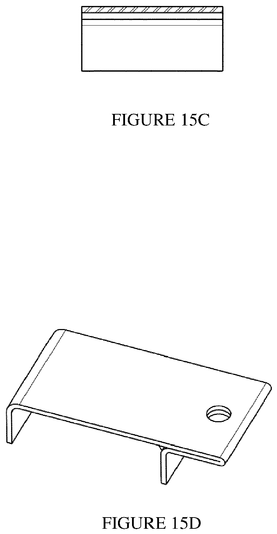

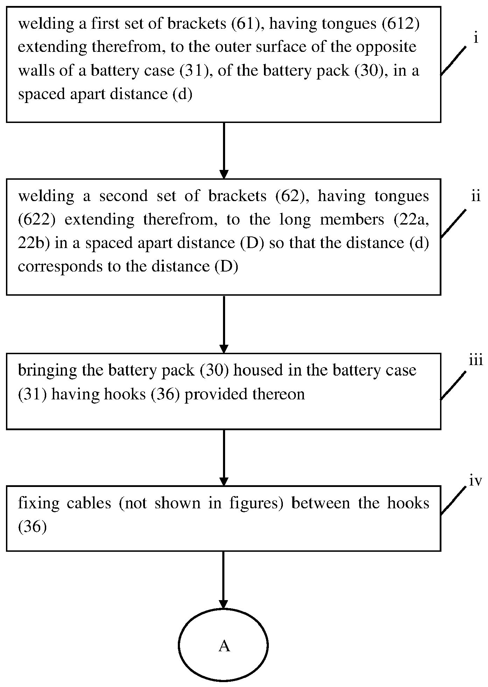

The preferred method of manufacturing of the second bracket 62, as illustrated through Figures 15A-15D, starts with a second blank 626 of sheet metal that is rectangular in shape. The second blank 626 is folded to obtain the overlapping portion 621 and the second tongue 622. Specifically, the second blank 626 is folded at three positions along its longitudinal extent, wherein a first bend 626a is through 90° on a first side, a second bend 626b is through 180° on a first side and a third bend 626c is through 90° on a second side. Thus, edge defined by the third bend 627 lies close to and along an operative lower surface of the second bracket 62 thus obtained. Fillet welding is performed along the edge defined by the third bend 627 to fix the edge defined by the third bend 627 to the operative inner surface of the second bracket 62. At a central position of the second tongue 622, a second aperture 624 is pierced and a nut 63 is fixed by welding, on the operative lower surface of the second tongue 622, wherein the nut 63 is aligned with the second aperture 624. Preferably, the second bracket 62 is fixed on the corresponding long member by performing a fillet-weld between the operative vertical edges of the overlapping portion 621 and the surface of the corresponding long member.

In an embodiment, the present disclosure envisages a cargo electrical vehicle comprising a cabin (10), a cargo section (20) arranged behind the cabin (10) and defined by a cargo tray (24), a battery pack (30) and a battery pack mounting arrangement. The cargo section (20) is supported on a chassis (21) of the vehicle defined by a pair of long members (22a, 22b) spaced apart from each other and cross members spanning the long members (22a, 22b). In another embodiment, the cargo electric vehicle is a three-wheeled cargo electric vehicle.

The present disclosure further envisages a method of mounting a battery pack 30 in a cargo electrical vehicle defined by a cabin 10, a cargo section 20 operatively behind the cabin 10. The cargo section 20 is supported on a chassis 21 defined by a pair of long members 22a, 22b spaced apart from each other and cross members spanning the long members 22a, 22b transversely. The cargo section 20 is defined by a cargo tray 24. The method comprises the steps of:
i. welding a first set of brackets (61), having tongues (612) extending therefrom, to the outer surface of the opposite walls of a battery case (31), of the battery pack (30), in a spaced apart distance (d);
ii. welding a second set of brackets (62), having tongues (622) extending therefrom, to the long members (22a, 22b) in a spaced apart distance (D) so that the distance (d) corresponds to the distance (D);
iii. bringing the battery pack (30) housed in the battery case (31) having hooks (36) provided thereon;
iv. fixing cables (not shown in figures) between the hooks (36);
v. lifting the battery pack (30) above the cargo section (20) of the vehicle by means of a lifting device;
vi. lowering the battery pack (30) such that the first set of brackets (61) rest on the second set of brackets (62);
vii. aligning the apertures configured on the first set of brackets (61) on the apertures configured on the second set of brackets (62); and
viii. passing fasteners (64) through the apertures and fastening the first set of brackets (61) to the second set of brackets (62) via the bolt passed through the apertures and fastened in the nut.

The mounting of the battery pack 30 is performed by lowering the battery pack 30 between the long members 22a, 22b of the vehicle while the first brackets 61 are aligned with the corresponding second brackets 62. The lowering of the battery pack 30 is preferably done using external power to control the lowering speed and thereby prevent an impact and of the brackets and subsequent misalignment or deformation. Lowering hooks 36 are provided on the battery case 31 of the battery pack 30 to facilitate lifting and lowering of the battery pack 30. Preferably, the Second aperture on the first bracket is aligned with the First aperture on the corresponding second bracket. Hence, a fastener 64 is screwed through the aligned apertures. Thus, the battery pack 30 is rigidly mounted on the long members 22a, 22b. Similarly, for removing the battery pack 30, the fasteners are unscrewed and the battery pack 30 is lifted by holding at the hooks 36.

The battery pack mounting arrangement of the present disclosure ensures that the battery pack 30 is located safely away from the cabin of the vehicle, thereby protecting the driver from any fire hazard related to the battery pack 30. Despite the significant volume of the battery pack 30, no compromise has to be made in the cargo capacity of the vehicle. The position of the battery pack being optimally close to the centre of gravity of the vehicle in its unloaded state, ride and handling characteristics are not affected due to the significant ratio of the weight of the battery pack to the vehicle's kerb weight. The battery pack is particularly placed at an optimally low position so that the overall centre of gravity of the vehicle is at a significantly low position, as a result of which stability at cornering is enhanced.

The foregoing description of the embodiments has been provided for purposes of illustration and not intended to limit the scope of the present disclosure. Individual components of a particular embodiment are generally not limited to that particular embodiment, but, are interchangeable. Such variations are not to be regarded as a departure from the present disclosure, and all such modifications are considered to be within the scope of the present disclosure.

### TECHNICAL ADVANCEMENTS

The present disclosure described herein above has several technical advantages including, but not limited to, the realization of a battery pack mounting arrangement for a cargo electric vehicle, that ensures:
- optimal cargo capacity;
- driver safety;
- good ride and handling characteristics;
- good cornering characteristics; and
- ease of assembly.

The embodiments herein and the various features and advantageous details thereof are explained with reference to the non-limiting embodiments in the following description. Descriptions of well-known components and processing techniques are omitted so as to not unnecessarily obscure the embodiments herein.

The foregoing description of the specific embodiments so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the spirit and scope of the embodiments as described herein.

The use of the expression "at least" or "at least one" suggests the use of one or more elements or ingredients or quantities, as the use may be in the embodiment of the disclosure to achieve one or more of the desired objects or results.

While considerable emphasis has been placed herein on the components and component parts of the preferred embodiments, it will be appreciated that many embodiments can be made and that many changes can be made in the preferred embodiments without departing from the principles of the disclosure. These and other changes in the preferred embodiment as well as other embodiments of the disclosure will be apparent to those skilled in the art from the disclosure herein, whereby it is to be distinctly understood that the foregoing descriptive matter is to be interpreted merely as illustrative of the disclosure and not as a limitation

## Claims

1. A battery pack mounting arrangement for a cargo electrical vehicle, said vehicle defined by a cabin (10), a cargo section (20) operatively behind said cabin (10), said cargo section (20) supported on a chassis (21) defined by a pair of long members (22a, 22b) spaced apart from each other and cross members spanning said long members (22a, 22b) transversely, said cargo section defined by a cargo tray (24), said mounting arrangement comprising:
a. a battery case (31) for housing said battery pack (30) configured to be nested in said cargo section (20) in a space (30a) defined by the space between said long members (22a, 22b), a wall of the cabin (10) and a first cross member (23);
b. a first set of brackets (61) weldable to the outer surface of the opposite walls of the battery case (31) in a predetermined spaced apart distance (d);
c. a second set of brackets (62) weldable to the long members and spaced apart with respect to each other at a distance (D), and complementary to the first set of brackets (61) in the operative configuration of the arrangement;
d. tongues (612, 622) extending from said first set of brackets (61) and said second set of brackets (62), said tongues (612) of said first set of brackets (61) and said tongues (622) of said second set of brackets (622) overlapping each other such that the first set of brackets (61) rests on the second set of brackets (62) on either side of the battery case (31);
e. a first set of apertures (614) provided on the tongues (612) in said first set of brackets (61), a second set of apertures (624) provided on the tongues (622) in said second set of brackets (62), said first set of apertures (614) and said second set of apertures (624) configured to be aligned to each other along common axes when said first set of tongues (612) is supported on said second set of tongues (622) in an operative configuration of said arrangement; and
f. a set of fasteners (64) configured to fasten said first set of brackets (61) to said second set of brackets (62) via said first set of apertures (614) and said second set of apertures (624).

2. The battery pack mounting arrangement as claimed in claim 1, wherein a nut (63) is fixed by welding, on the operative lower surface of said first tongue (612), wherein said nut (63) is aligned with said first aperture (614) for receiving said fastener (64).

3. The battery pack mounting arrangement as claimed in claim 1, wherein said second set of brackets (62) is fixed on the surface of said battery case (31) of said battery pack (30) with the shortest width.

4. The battery pack mounting arrangement as claimed in claim 1, wherein each of said first brackets (61) is L-shaped, has a case-side wall (611) weldable to said battery case (31) and is provided with reinforcing ribs (613).

5. The battery pack mounting arrangement as claimed in claim 1, said first tongue (612) of said first bracket (61) extends from said case-side wall (611) towards an operatively outer side of said battery case (31).

6. The battery pack mounting arrangement as claimed in claim 1, wherein each of said second brackets (62) has an overlapping portion (621) weldable to a long member and is shaped to overlap an operative top surface of said long member.

7. The battery pack mounting arrangement as claimed in claim 1, said second tongue (622) of said second bracket (62) extends from said overlapping portion (621) towards an operatively inner side of the corresponding long member relative to said vehicle.

8. The battery pack mounting arrangement as claimed in claim 1 comprising four first brackets (61) and four second brackets (62).

9. The battery pack mounting arrangement as claimed in claim 1, wherein said battery pack (30) is disposed at an operative front extreme position between said long members (22a, 22b).

10. The battery pack mounting arrangement as claimed in claim 1, wherein said battery pack (30) is disposed below said cargo tray (24), preferably said battery pack (30) is disposed below the bed of said cargo tray (24).

11. The battery pack mounting arrangement as claimed in claim 1, wherein each of said long members (22a, 22b) has a box-type construction and a majority of the area of the lateral surfaces of said battery pack (30) is covered by the lateral surfaces of said long members (22a, 22b) on either side, preferably the centre of gravity of said battery pack (30) lies within a space between the lateral surfaces of said long members (22a, 22b).

12. The battery pack mounting arrangement as claimed in claim 1, wherein said battery pack (30) is disposed to have the longest dimension of the battery pack (30) extend in a lateral axis of the vehicle.

13. The battery pack mounting arrangement as claimed in claim 1, wherein first set of brackets (61) are spaced apart from corners of said battery case (31).

14. The battery pack mounting arrangement as claimed in claim 1, wherein each of said first brackets (61) is folded from a single first blank (616) and/or each of said second brackets (62) is folded from a single second blank (626).

15. A cargo electrical vehicle comprising a cabin (10), a cargo section (20) arranged behind said cabin (10) and defined by a cargo tray (24), a battery pack (30) and a battery pack mounting arrangement as claimed in claims 1 to 14, wherein said cargo section (20) is supported on a chassis (21) of the vehicle defined by a pair of long members (22a, 22b) spaced apart from each other and cross members spanning said long members (22a, 22b); said cargo electrical vehicle being preferably a three-wheeled cargo electric vehicle.
